(19) Europäisches Patentamt
European Patent Office
Office européen des brevets

(11) **EP 2 175 299 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(51) Int Cl.:
*G02B 13/14* *(2006.01)* *G02B 13/16* *(2006.01)*

(21) Anmeldenummer: **09012485.0**

(22) Anmeldetag: **02.10.2009**

(54) **Optik für eine Infrarotkamera**

Lens for an infrared camera

Optique pour une caméra infrarouge

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.10.2008 DE 102008050796**

(43) Veröffentlichungstag der Anmeldung:
**14.04.2010 Patentblatt 2010/15**

(73) Patentinhaber: **Diehl BGT Defence GmbH & Co. KG**
**88662 Überlingen (DE)**

(72) Erfinder: **Baumgart, Jörg**
**88634 Herdwangen-Schönach (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
**EP-A1- 0 452 203 EP-A2- 0 309 075**
**WO-A2-02/08798 DE-C1- 2 948 831**
**US-A- 4 697 866**

**Beschreibung**

Die Erfindung betrifft eine Infrarotkamera mit einer Optik mit einer Anzahl von in einem Strahlengang zwischen einer Eintrittspupille und einer Bildebene hintereinander angeordneten Linsenelementen, die entweder einer ersten oder zweiten Gruppe mit jeweils zumindest einem Linsenelement angehören.

Aus der EP 0 309 075 A2 ist ein Linsensystem mit einer Linse aus Zinksulfid und einer Linse aus Zinkselenid bekannt, welches eine Abbildung im Spektralbereich von 3-5 $\mu$m und im Spektralbereich von 8-12 $\mu$m auf eine gemeinsame Bildebene erlaubt.

Die EP 0 452 203 A1 beschäftigt sich mit einem Sichtinstrument mit einem bispektralen Objektiv mit geringer Dispersion im Infrarotbereich. Um eine geringe Dispersion sowohl im Spektralbereich von 3-5 $\mu$m als auch im Spektralbereich von 8-12 $\mu$m zu erreichen, wird ein Objektiv mit Linsen aus den Materialien Zinksulfid, Zinkselenid und Germanium verwendet, welches eine Abbildung auf einen Detektor mit jeweils einem Sensorstab für den jeweiligen Spektralbereich erlaubt.

Für Fernaufnahmen ausgelegte Kameras arbeiten bevorzugt im fernen infraroten Spektralbereich in einem Wellenlängenbereich von etwa 8 $\mu$m bis 12 $\mu$m, da die Atmosphäre in diesem Bereich eine gute Transmission aufweist. Zum Überwachen weiter Raumbereiche kann eine Überwachungskamera mit einer Weitwinkeloptik ausgestattet werden, die zum Ermöglichen einer guten thermischen Auflösung zweckmäßigerweise sehr lichtstark ist. Bei einer Überwachung eines großen Raumbereichs ist die Wahrscheinlichkeit groß, dass zumindest gelegentlich die Sonne innerhalb des Gesichtsfelds steht. Die direkte Einstrahlung der Sonne kann ausreichen, um eine bleibende Schädigung des Detektors der Kamera zu bewirken. Deswegen kann es notwendig sein, geeignete Schutzmaßnahmen zu treffen, die eine solche Beschädigung vermeiden.

Eine Dämpfung der Sonneneinstrahlung kann entweder dadurch erreicht werden, dass eine spezielle, beispielsweise mechanische, Blende die Sonneneinstrahlung abschirmt, oder indem ein nicht linear-optischer Effekt spezieller optischer Materialien ausgenutzt wird. Dies bedeutet in diesem Zusammenhang, dass sich eine optische Eigenschaft des Materials, beispielsweise seine Absorption, bei einer erhöhten Bestrahlungsstärke ändert. Notwendig für beide Verfahren ist eine Lokalisierung der Sonneneinstrahlung auf dem Material, wie sie in der Bildebene einer Optik erreicht wird. In dieser Bildebene befindet sich jedoch der eigentliche Detektor. Daher erfordert das Dämpfen der direkten Sonneneinstrahlung eine aufwendigere Optik, die zusätzlich zu der eigentlichen Bildebene eine Zwischenbildebene realisiert. In dieser Zwischenbildebene kann ein Dämpfungselement angebracht werden.

Es ist eine Aufgabe der vorliegenden Erfindung, eine Infrarotkamera mit einer Optik anzugeben, mit der eine Dämpfung direkter Sonneneinstrahlung zuverlässig und auf einfache Weise erreicht werden kann.

Diese Aufgabe wird durch eine Infrarotkamera mit einer Optik entsprechend den Merkmalen des Patentanspruchs 1 gelöst. Dabei weist die erste Gruppe ausschließlich Linsenelemente aus Zinksulfid (ZnS) und die zweite Gruppe ausschließlich Linsenelemente aus Zinkselenid (ZnSe) auf. Eine solche Optik ist sowohl im nahen als auch im fernen Infrarot transmissiv, sodass der ferne infrarote Spektralbereich zur Bildaufnahme und der nahe und somit energiereichere infrarote Spektralbereich zur Beeinflussung eines optischen Materials mit Hilfe eines nicht linear-optischen Effekts verwendet werden kann. Der Begriff Gruppe wird vorliegend im Sinn von "Klasse", "Gattung" verstanden.

Die Erfindung geht hierbei von der Überlegung aus, dass eine Bestrahlungsstärke der Sonne im fernen Infrarot zwar für eine Beschädigung des Detektors ausreicht, in der Regel jedoch nicht für ein Auslösen eines nicht linear-optischen Effekts, für den höhere Bestrahlungsstärken notwendig sind. Diese höheren Bestrahlungsstärken können beispielsweise im sichtbaren oder im nahen Infrarot realisiert werden. Als nahes Infrarot wird in diesem Zusammenhang ein Spektralbereich zwischen 0,8 $\mu$m und 1,5 $\mu$m angesehen. Als mittleres und fernes Infrarot wird ein Spektralbereich zwischen 3 $\mu$m und 5 $\mu$m bzw. zwischen 8 $\mu$m und 12 $\mu$m angesehen.

Mit einer Optik, die sowohl im nahen Infrarot als auch im fernen Infrarot durchlässig ist, kann eine Abbildung der Sonne im nahen Infrarot auf einem Filterelement realisiert werden und gleichzeitig eine Abbildung im fernen Infrarot auf einen Detektor. Bei der erfindungsgemäßen Anordnung des optischen Filters vor dem Detektor kann der Bereich des Detektors, der von direkter Sonneneinstrahlung getroffen wird, abgeschattet werden, ohne dass die gesamte Detektorfläche abgeschattet wird.

Bei der Verwendung von ausschließlich Zinkselenid und Zinksulfid als Material für die Linsenelemente kann ein Farblängsfehler der Optik im fernen Infrarot - und in gewissem Maße auch im mittleren Infrarot - weitgehend ausgeglichen werden, sodass eine Fokussierung eines von der Optik anvisierten Objekts im fernen Infrarot in eine einheitliche Bildebene und somit scharf auf den Detektor erfolgen kann. Hierdurch ist jedoch ein Farblängsfehler über den gesamten Infrarotbereich, also vom fernen bis zum nahen Infrarot, noch nicht korrigiert, so dass eine scharfe Aufnahme gleichzeitig im fernen wie im nahen Infrarot nicht möglich ist.

Durch den Farblängsfehler erfolgt eine Abbildung des Gegenstands im nahen Infrarot nicht in der gleichen Bildebene wie eine Abbildung im fernen Infrarot. Die Optik kann hierbei so eingestellt werden, dass eine Bildebene des nahen Infrarot im Strahlengang vor einer Bildebene des fernen Infrarot liegt. Diese Bildebene kann allerdings zur scharfen und energiereichen Abbildung der Sonne im nahen Infrarot verwendet werden, so dass ein Dämpfungsfilter, der in dieser Bildebene angeordnet ist, ausgelöst werden kann und den Detektor schützt. Hierbei ist nicht eine Zwischenbildebene gemeint, die im Strahlengang vor einer abschließenden Bildebene liegt, sondern gleichartige Bildebenen, also Bildebenen gleicher Art, wobei zwischen den Bildebenen im nahen Infrarot und im fernen Infrarot keine Linsenelemente der Optik liegen. Die Optik ist zweckmäßigerweise zwischenbildfrei, wodurch eine einfache Optik erreichbar ist.

Durch die Einstellung des Farblängsfehlers der Optik so, dass die Bildebene im nahen Infrarot im Strahlengang vor der Bildebene im fernen Infrarot liegt, kann ein dämpfender Filter in der Bildebene des nahen Infrarot angeordnet werden. Auf den dämpfenden Filter wird somit die Sonne im nahen Infrarot abgebildet, sodass dort genügend Energie vorliegt, um einen Filter unter Ausnutzung eines nicht linear-optischen Effekts auszulösen, sodass dessen Lichtdurchlässigkeit im gesamten infraroten Spektralbereich herabgesetzt wird. Zur Anordnung in dieser Bildebene des nahen Infrarot ist somit ein Filter besonders geeignet, dessen Absorption von Strahlung bei einer Erhöhung der Bestrahlungsstärke im nahen Infrarot ansteigt, sodass hierdurch bei einer Abbildung der Sonne auf den Filter eine Dämpfung bewirkt wird, die den im Strahlengang dahinter liegenden Detektor schützt.

Vorteilhafterweise ist die Optik so erstellt, dass sie einen kleineren Farblängsfehler im fernen Infrarot aufweist als im nahen Infrarot. Auf diese Weise kann über einen größeren Wellenlängenbereich scharf auf den Detektor abgebildet werden, wohingegen eine Abbildung der Sonne auf dem Filter nicht über einen größeren Wellenlängenbereich scharfe nötig ist und auf eine deutliche Korrektur des Farblängsfehlers im nahen Infrarot verzichtet werden kann.

Je nach Einstellung des Farblängsfehlers, also dem Abstand der Bildebenen voneinander, kann der Filter in unmittelbarer Nähe oder in einem kleinen Abstand vom Detektor angeordnet werden. Zweckmäßigerweise ist der Filter nah vor dem Detektor angeordnet, sodass die auf ihn im nahen Infrarot abgebildete Sonne nicht wesentlich kleiner ist als die im fernen Infrarot unscharf auf ihm abgebildete Sonne und ein ungedämpfter Ring vorhanden bleibt. Die Entfernung des dämpfenden Filters zum Detektor ist zweckmäßigerweise weniger als 20% der paraxialen Gegenstandsweite der Bildebene im fernen Infrarot vom letzten Linsenelement.

Bei Verwendung von ausschließlich solchen Linsenelementen für die Optik, die entweder aus Zinkselenit oder Zinksulfid gefertigt sind, kann eine hohe Transmission sowohl im nahen Infrarot als auch im fernen Infrarot gewährleistet werden. Zweckmäßigerweise ist die Optik von der Eingangspupille bis zum Detektor sowohl im nahen Infrarot als auch im fernen Infrarot über 70% transmissiv, sodass höchstens 30% der Strahlung in beiden Wellenlängenbereichen, beispielsweise bei 1,2 $\mu$m im nahen Infrarot und 10 $\mu$m im fernen Infrarot, von der Optik absorbiert wird. Hierbei ist es nicht notwendig, dass die optische Durchlässigkeit über alle Bereiche des nahen Infrarot und fernen Infrarot gegeben ist.

Zur Bildaufnahme im fernen Infrarot, in dem die Atmosphäre eine besonders gute Transmission aufweist, ist die Ausführung des Detektors als Bolometerdetektor besonders vorteilhaft. Eine Vielzahl von kleinen Bolometern wird hierbei zweckmäßigerweise gitterförmig angeordnet. Bolometer haben im Gegensatz zu Detektoren aus Halbleiterelementen den Vorteil, dass sie nicht auf extrem tiefe Temperaturen gekühlt werden müssen. Der Nachteil einer etwas geringeren Empfindlichkeit kann durch eine lichtstarke Optik kompensiert werden. Ein Bolometerdetektor ist im fernen Infrarot sensibel, nicht jedoch im nahen Infrarot.

Zur Gewährleistung einer guten Transmission sowohl im nahen als auch im fernen Infrarot umfasst die Optik ausschließlich Linsenelemente der ersten und der zweiten Gruppe zwischen der Eintrittspupille und der Bildebene bzw. den Bildebenen. Die Gruppen können beide nur ein einziges Element aufweisen, wobei eine Korrektur des Farblängsfehlers im fernen Infrarot besonders gut mit einer hohen Abbildungsgüte verbunden werden kann, wenn beide Gruppen jeweils zumindest zwei Linsenelemente aufweisen. Alle Linsenelemente der Optik sind zweckmäßigerweise unmittelbar hintereinander angeordnet. Zweckmäßigerweise ist die Blendenzahl der Optik 1, wodurch eine kompakte Optik realisiert ist.

Eine besonders gute Korrektur des Farblängsfehlers im fernen Infrarot kann erreicht werden, wenn die Optik mehr Linsenelemente der zweiten Gruppe als Linsenelemente der ersten Gruppe aufweist. Hierdurch kann einem Farblängsfehler, der durch die größere Dispersion von Zinksulfid bewirkt wird, durch die größere Anzahl von Linsenelementen aus Zinkselenid, das eine geringere Dispersion aufweist, entgegengewirkt werden. Besonders vorteilhaft sind drei Linsen aus Zinkselenid und zwei Linsen aus Zinksulfid.

In einer weiteren vorteilhaften Ausführungsform der Erfindung sind die Linsenelemente der ersten Gruppe Zerstreuungslinsen und die Linsenelemente der zweiten Gruppe Sammellinsen. Durch die Verwendung des Materials mit der geringeren Dispersion, nämlich Zinkselenid, zur Herstellung der Sammellinsen kann - bei insgesamt sammelndem Effekt der Optik - ein Farblängsfehler im fernen Infrarot besonders gering gehalten werden.

Um eine kompakte Optik bei hoher Bildgüte zu erreichen, ist es vorteilhaft, Linsenelemente mit asphärischen Oberflächen auszustatten. Vorteilhafterweise werden die asphärischen Oberflächen auf den Zinksulfidlinsen realisiert, da dieses Material besonders geeignet für eine Bearbeitung, z. B. durch Diamantdrehen, ist.

Bei einer Verwendung in einem Flugkörper ist es vorteilhaft, wenn eine Öffnung in der Außenhaut des Flugkörpers, durch die Strahlung in die Optik geleitet wird, möglichst klein ist. Eine kleine Eintrittsöffnung kann erreicht werden, wenn die Optik eine Vorderblende aufweist. Bei der besonders geeigneten Anordnung mit Vorderblende kann an der Position der vorne liegenden Eintrittspupille vorteilhafterweise ein Eintrittsfenster der Optik angebracht werden. Hierdurch kann das Eintrittsfenster besonders leicht z. B. in gekrümmten Oberflächen integriert oder unauffällig in Strukturelementen eingefügt werden.

Weitere Vorteile ergeben sich aus der folgenden Zeichnungsbeschreibung. In der Zeichnung ist ein Ausführungsbeispiel der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:

Fig. 1 eine schematische Darstellung einer Infrarotkamera mit einer bispektralen Optik und einem Schutzfilter vor einem Detektor und

Fig. 2 eine Linsendarstellung der bispektralen Optik aus Figur 1.

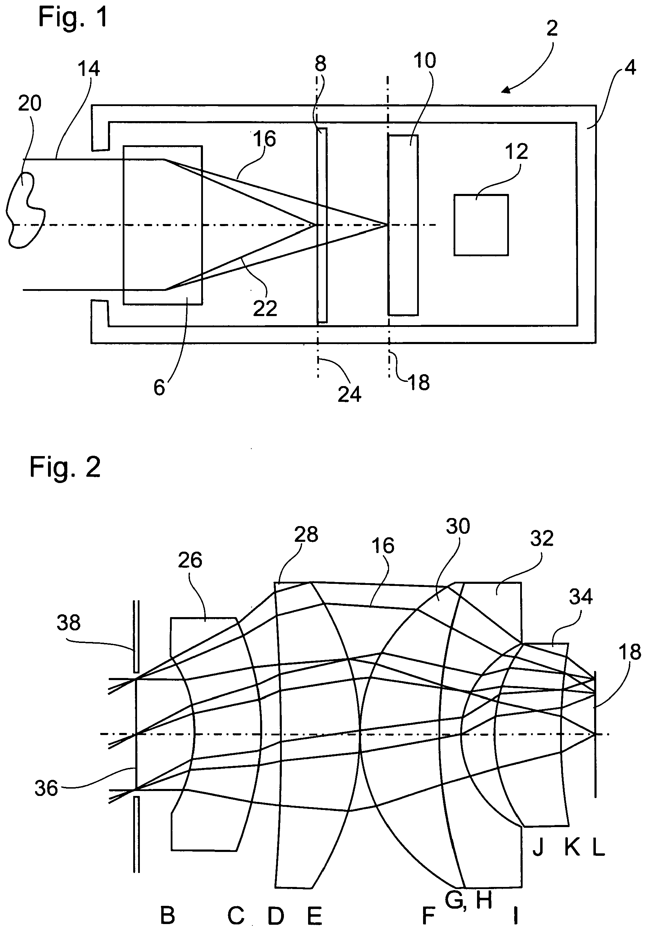

Figur 1 zeigt eine Infrarotkamera 2 in einer schematischen Darstellung, die in einem Gehäuse 4 eine bispektrale Optik 6, einen Schutzfilter 8 und einen Detektor 10 beherbergt. Eine Steuereinheit 12 dient zur Steuerung der Bildaufnahme durch den Detektor 10. Dargestellt ist außerdem ein bispektraler Strahlengang 14, dessen Strahlen vor der Optik 6 vereint sind und der nach der Optik 6 durch einen Farblängsfehler der Optik 6 aufgespalten ist. Die einzelnen Elemente der Optik 6 sind hierbei in Größe, Form und Dispersion so eingestellt, dass das Spektrum des fernen Infrarot nur einen sehr geringen Farblängsfehler aufweist, sodass dieses Spektrum in einem einzigen Strahlengang 16 dargestellt ist. In der Bildebene 18 dieses Strahlengangs 16 ist der Detektor 10 bzw. dessen strahlungsempfindliche Fläche angeordnet, sodass von einem durch die Optik 6 angeschauten Objekt 20 eine scharfe Abbildung im fernen Infrarot auf dem Detektor 10 geschaffen wird. Ein weiterer Strahlengang 22 ist für das nahe Infrarot eingezeichnet mit einer Bildebene 24, die vor der Bildebene 18 des fernen Infrarots liegt. Der Farblängsfehler im Bereich des nahen Infrarot ist nicht so gut kompensiert wie der Farblängsfehler im fernen Infrarot, sodass der Strahlengang 22 nur exemplarisch für eine Frequenz im nahen Infrarot dargestellt ist. Anderen Frequenzen im nahen Infrarot können andere Bildebenen zugewiesen werden, die beispielsweise innerhalb des optischen Filters 8 zu liegen kommen.

Durch den Farblängsfehler der bispektralen Optik 6 wird das Objekt 20 im fernen Infrarot scharf auf den Detektor 10 abgebildet und im nahen Infrarot auf dem Filter 8 oder im Filter 8 abgebildet. Das gleiche gilt für die Sonne, deren energiereiche Strahlung im nahen Infrarot auf oder im Filter 8 gebündelt auftrifft. Durch die Energieaufnahme im nahen Infrarot wird die Strahlungsabsorption des Filters 8 erhöht, sodass der Filter 8 undurchlässiger für Strahlung in nahen und fernen Infrarot wird. Die Änderung der Strahlungsabsorption des Filters 8 geschieht sehr schnell, beispielsweise im Bereich von wenigen 100 ms, sodass beim Eintreten der Sonne in das Bild des Detektors 10 der Bereich der Sonne durch den Filter 8 sehr schnell abgeschattet wird. Der Detektor 10 wird hierbei geschont, ohne dass seine übrigen Bereiche abgeschattet werden und damit eine Bildaufnahme vollständig unterbrochen wäre.

Bei der in Figur 1 dargestellten Prinzipskizze ist der Filter 8 der Anschaulichkeit halber ein Stück weit vor dem Detektor 10 im Strahlengang 16, 22 angeordnet. Bedingt hierdurch wird die Sonne im fernen Infrarot unscharf und damit größer auf dem Filter 8 abgebildet, als im nahen Infrarot, sodass ein ringförmiger, unabgeschatteter Bereich um die Sonne verbleiben könnte. Diesem Nachteil kann entgegengewirkt werden, wenn der Filter 8 in beispielsweise unmittelbarer Nachbarschaft zum Detektor 10 angeordnet wird, sodass ein Unterschied in der Abbildungsgröße der Sonne auf den Filter 8 und auf den Detektor 10 sehr klein wird. Der Farblängsfehler der Optik 6 ist hierbei so angepasst, dass der Filter 8 stets in einer Bildebene 24 von Strahlung im nahen Infrarot angeordnet ist, wohingegen der Detektor 10 in der Bildebene 18 des fernen Infrarots zu liegen kommt. Ein dennoch nicht zu vermeidender sehr kleiner Ring ist hinsichtlich einer Beschädigung des Detektors 10 durch starke Sonneneinstrahlung daher unschädlich, weil der Filter 8 nicht nur im direkten Bereich der Sonneneinstrahlung im nahen Infrarot undurchsichtiger wird, sondern auch in einem kleinen Bereich darüber hinaus, bedingt durch Wärmeleitung vom direkt angestrahlten Bereich ein Stück weit in dessen Umgebung herein, die ebenfalls zu einer Erhöhung der Strahlungsabsorption des Filters 8 führt.

Figur 2 zeigt die Anordnung von Linsenelementen 26, 28, 30, 32, 34 der Optik 6 zwischen einer angedeuteten Eintrittspupille 36 an einer Vorderblende 38 und der Bildebene 18. Ebenfalls dargestellt ist der Strahlengang 16, wohingegen aus Gründen der Übersichtlichkeit auf die Darstellung des Strahlengangs 22 verzichtet wurde. Hierbei läge die Bildebene 24 nur innerhalb eines Bereichs von 20 % Prozent der paraxialen Gegenstandsweite von der Bildebene 18 zum letzten Linsenelement 34 von der Bildebene 18 entfernt.

Die Linsenelemente 26 - 34 sind in zwei Gruppen aufgeteilt, wobei die erste Gruppe die Linsenelemente 26 und 32 umfasst, die aus Zinksulfid gefertigt sind, und die übrigen Linsenelemente 28, 30, 35 der zweiten Gruppe angehören und aus Zinkselenid gefertigt und. Andere Linsenelemente sind zwischen der Eintrittspupille 36 und der Bildebene 18 des Detektors 10 nicht angeordnet. Die Optik 6 weist eine Brennweite von 18 mm auf, die zusammen mit üblichen Bolometergittern für den Detektor 10 ein Gesichtsfeld von ca. 60° Grad realisiert. Die Blendenzahl beträgt 1.

Die Dispersion von Zinksulfid ist im fernen Infrarot positiv und größer als die Dispersion von Zinkselenid. Durch die Verwendung von drei Linsenelementen 28, 30, 34 aus Zinkselenid als Sammellinsen kann ein sammelnder Effekt der Optik 6 erreicht werden. Die Verwendung der beiden Zerstreuungslinsen aus Zinksulfid wirkt diesem sammelnden Effekt nur teilweise entgegen. Durch die größere Dispersion des Zinksulfids kann der Farblängsfehler im fernen Infrarot jedoch weitgehend ausgeglichen werden. Die Wahl der Geometrie der Linsenelemente 26 - 34 ist hierbei so gewählt, dass der Farblängsfehler im fernen Infrarot weitgehend kompensiert wird, wohingegen der Farblängsfehler im Bereich von fernen bis zum nahen Infrarot nicht kompensiert wird, sodass der Filter 8 vor dem Detektor 10 angeordnet werden kann und die energiereiche Strahlung des nahen Infrarot auf den Filter 8 und nicht auf den Detektor 10 fokussiert wird. Der Farblängsfehler führt dazu, dass die Bildebene 24 bei kürzeren Wellenlängen zum Objektraum hin verschoben wird.

Ein spezieller Vorteil dieses Optikkonzepts ist die vorne liegende Eintrittspupille 36. An deren Position könnte vorteilhafterweise ein Eintrittsfenster angebracht werden. Mit einem freien Durchmesser von z.B. nur 18 mm ist dieses Fenster sehr klein und kann leicht in eine gekrümmte Oberfläche integriert oder unauffällig in Strukturelementen untergebracht werden.

Die Optik 6 weist zwei asphärische Flächen auf, nämlich in den Flächen B und I. Diese sind beide konkav und beide in das Material des Zinksulfid eingebracht, da dieses Material geeigneter für eine Bearbeitung ist, z.B. durch Diamantdrehen, als Zinkselenid. Die detaillierten Designdaten können der unten stehenden Tabelle entnommen werden, wobei die der asphärischen Oberflächen entsprechend der folgenden Formen definiert sind:

$$z = \frac{cv\,r^2}{1 + \sqrt{1 - cv\,(cc + 1)\,r^2}} + adr^4 + aer^6 + afr^8 + agr^{10}$$

r bezeichnet dabei den Radius, cv die Krümmung und cc die konische Konstante. Bei ad, ae, af, ag handelt es sich um Asphärenkoeffizienten.

Die Abbildungsqualität der Optik 6 ist gut und hat nur zu den Bildrändern hin einen leichten Abfall in der Modulationstransferfunktion. Durch das annähernd symmetrische Design beträgt die Verzeichnung weniger als 12 % Prozent. Diese kann, auf Kosten der Abbildungsqualität, weiter verringert werden.

Designdaten der Optik 6 und ihrer Linsenelemente 28 - 34:

| SRF | Radius | Dicke | Aperturradius | Glas |
|---|---|---|---|---|
| Objekt | -- | 1.0148e+21 | 5.8588e+20 | Luft |
| AST | -- | 8.810591 | 9.000001 A | Luft |
| B | -31.977992 | 10.000000 | 13.000000 | ZnS |
| C | -50.763584 | 3.000000 | 19.000000 | Luft |
| D | -306.428056 | 12.000000 | 25.000000 | ZnSe |
| E | -45.253527 | 0.100000 | 25.000000 | Luft |
| F | 28.652465 | 12.000000 | 25.000000 | ZnSe |
| G | 87.642612 | 0.100000 | 25.000000 | Luft |
| H | 87.642612 | 3.000000 | 25.000000 | ZnS |
| I | 16.433625 | 5.000000 | 15.000000 | Luft |
| J | 27.062921 | 10.000000 | 15.000000 | ZnSe |
| K | 74.917063 | 0.388909 | 13.614740 | Luft |
| L | -- | 5.000000 | 13.384560 | Luft |
| IMS | -- | -- | 10.425259 | |

Konische und polynomiale asphärische Daten

| SRF | CC | AD | AE | AF | AG |
|---|---|---|---|---|---|
| 2 | -- | -1.2824e-05 | -7.3959e-08 | 4.9263e-10 | -2.1724e-12 |
| 9 | -- | -6.5913e-06 | -5.3264e-08 | 3.2725e-10 | -9.9062e-13 |

Bezugszeichenliste

| | |
|---|---|
| 2 | Infrarotkamera |
| 4 | Gehäuse |
| 6 | Optik |
| 8 | Filter |
| 10 | Detektor |
| 12 | Steuereinheit |
| 14 | Strahlengang |
| 16 | Strahlengang |
| 18 | Bildebene |
| 20 | Objekt |
| 22 | Strahlengang |
| 24 | Bildebene |
| 26 | Linsenelement |
| 28 | Linsenelement |
| 30 | Linsenelement |
| 32 | Linsenelement |
| 34 | Linsenelement |
| 36 | Eintrittspupille |
| 38 | Vorderblende |

**Patentansprüche**

1.  Infrarotkamera (2) mit

    - einer Optik (6) mit in einem Strahlengang (16, 22) zwischen einer Eintrittspupille (36) und einer Bildebene (18, 24) hintereinander angeordneten Linsenelementen (26, 28, 30, 32, 34), die entweder einer ersten oder einer zweiten Materialgruppe mit jeweils zumindest einem Linsenelement (26, 28, 30, 32, 34) angehören, wobei die erste Materialgruppe ausschließlich Linsenelemente (26, 32) aus Zinksulfid (ZnS) und die zweite Materialgruppe ausschließlich Linsenelemente (28, 30, 34) aus Zinkselenid (ZnSe) aufweist,
    - einem Detektor (10) und
    - einem Filter (8), der zwischen dem Detektor (10) und der Optik (6) angeordnet ist,

    wobei die Optik (6) einen Farblängsfehler aufweist und der Filter (8) in einer Bildebene (24) von Strahlung angeordnet ist, die kurzwelliger ist als Strahlung, für die der Detektor (10) empfindlich ist,
    wobei die Wellenlänge der kurzwelligeren Strahlung im nahen Infrarot liegt und der Detektor (10) im fernen Infrarot empfindlich ist, und
    wobei der Filter (8) eine Strahlungsabsorption im fernen Infrarot aufweist, die mit Erhöhung der Bestrahlung im fernen Infrarot ansteigt.

2.  Infrarotkamera (2) nach Anspruch 1,
    wobei die Optik (6) einen größeren Farblängsfehler im nahen Infrarot als im fernen Infrarot aufweist.

3.  Infrarotkamera (2) nach Anspruch 1 oder 2,
    wobei ein Farblängsfehler der Optik (6) so eingestellt ist, dass eine Bildebene (24) des nahen Infrarot im Strahlengang (16, 22) vor einer Bildebene (18) des fernen Infrarot liegt.

4.  Infrarotkamera (2) nach einem der vorhergehenden Ansprüche,
    wobei die zweite Materialgruppe mehr Linsenelemente (28, 30, 34) aufweist als die erste Materialgruppe.

5.  Infrarotkamera (2) nach einem der vorhergehenden Ansprüche,
    wobei die Linsenelemente (26, 32) der ersten Materialgruppe Zerstreuungslinsen sind und die Linsenelemente (28, 30, 34) der zweiten Materialgruppe Sammellinsen.

**6.** Infrarotkamera (2) nach einem der vorhergehenden Ansprüche,
wobei zwei Linsenelemente (26, 32) der ersten Materialgruppe, jeweils mit einer asphärischen Fläche versehen sind.

**7.** Infrarotkamera (2) nach einem der vorhergehenden Ansprüche,
wobei die Blendenzahl der Optik (6) 1 beträgt.

**8.** Infrarotkamera (2) nach einem der vorhergehenden Ansprüche,
wobei die Optik (6) als Vorderblendenoptik ausgestaltet ist.

**9.** Infrarotkamera (2) nach einem der vorhergehenden Ansprüche,
wobei der Detektor (10) ein Bolometerdetektor ist.


**Claims**

**1.** Infrared camera (2) comprising

- an optical unit lens (6) with lens elements (26, 28, 30, 32, 34) arranged in succession in a beam path (16, 22) between an entrance pupil (36) and an image plane (18, 24), said lens elements belonging to either a first material group or a second material group with in each case at least one lens element (26, 28, 30, 32, 34), the first material group only containing lens elements (26, 32) made out of zinc sulphide (ZnS) and the second material group only containing lens elements (28, 30, 34) made out of zinc selenide (ZnSe),
- a detector (10) and
- a filter (8) arranged between the detector (10) and the optical unit (6),

wherein the optical unit (6) has a longitudinal chromatic aberration and the filter (8) is arranged in an image plane (24) of radiation with a shorter wavelength than radiation to which the detector (10) is sensitive,
wherein the wavelength of the radiation with the shorter wavelength lies in the near infrared and the detector (10) is sensitive in the far infrared, and
wherein the filter (8) has radiation absorption in the far infrared which increases with an increase of the irradiation in the far infrared.

**2.** Infrared camera (2) according to Claim 1,
wherein the optical unit (6) has a greater longitudinal chromatic aberration in the near infrared than in the far infrared.

**3.** Infrared camera (2) according to Claim 1 or 2,
wherein a longitudinal chromatic aberration of the optical unit (6) is set so that, in the beam path (16, 22), an image plane (24) of the near infrared lies upstream of an image plane (18) of the far infrared.

**4.** Infrared camera (2) according to one of the preceding claims,
wherein the second material group has more lens elements (28, 30, 34) than the first material group.

**5.** Infrared camera (2) according to one of the preceding claims,
wherein the lens elements (26, 32) of the first material group are diverging lenses and the lens elements (28, 30, 34) of the second material group are converging lenses.

**6.** Infrared camera (2) according to one of the preceding claims,
wherein two lens elements (26, 32) of the first material group are each provided with an aspherical surface.

**7.** Infrared camera (2) according to one of the preceding claims, wherein the f-number of the optical unit (6) is 1.

**8.** Infrared camera (2) according to one of the preceding claims, wherein the optical unit (6) is configured as a front-diaphragm optical unit.

**9.** Infrared camera (2) according to one of the preceding claims, wherein the detector (10) is a bolometer detector.

**Revendications**

1.  Caméra infrarouge (2) comportant

    - une optique (6) comportant des éléments de lentilles (26, 28, 30, 32, 34) disposés les uns à la suite des autres sur un chemin de faisceau (16, 22) entre une pupille d'entrée (36) et un plan image (18, 24), lesquels éléments appartiennent soit à un premier groupe soit à un deuxième groupe de matériaux contenant respectivement au moins un élément de lentille (26, 28, 30, 32, 34), dans laquelle le premier groupe de matériaux comporte exclusivement des éléments de lentilles (26, 32) constitués de sulfure de zinc (ZnS) et le deuxième groupe de matériau comporte exclusivement des éléments de lentilles (28, 30, 34) constitués de séléniure de zinc (ZnSe),
    - un détecteur (10) et
    - un filtre (8) qui est disposé entre le détecteur (10) et l'optique (6),

    dans lequel l'optique (6) présente une aberration chromatique longitudinale et le filtre (8) est disposé dans un plan image (24) d'un rayonnement dont la longueur d'onde est inférieure à celle d'un rayonnement auquel est sensible le détecteur (10),
    dans laquelle la longueur d'onde du rayonnement de faible longueur d'onde se situe dans l'infrarouge proche et le détecteur (10) est sensible à l'infrarouge lointain, et
    dans laquelle le filtre (8) présente une absorption de rayonnement d'autant plus élevée dans l'infrarouge lointain que l'exposition à l'infrarouge lointain augmente.

2.  Caméra infrarouge (2) selon la revendication 1,
    dans laquelle l'optique (6) présente une aberration chromatique longitudinale supérieure dans l'infrarouge proche à sa valeur dans l'infrarouge lointain.

3.  Caméra infrarouge (2) selon la revendication 1 ou 2,
    dans laquelle une aberration chromatique longitudinale (6) est réglée de manière à ce qu'un plan image (24) de l'infrarouge proche sur le chemin de faisceau (16, 22) se situe à l'avant d'un plan image (18) de l'infrarouge lointain.

4.  Caméra infrarouge (2) selon l'une quelconque des revendications précédentes,
    dans laquelle le deuxième groupe de matériaux comporte davantage d'éléments de lentilles (28, 30, 34) que le premier groupe de matériaux.

5.  Caméra infrarouge (2) selon l'une quelconque des revendications précédentes,
    dans laquelle les éléments de lentilles (26, 32) du premier groupe de matériaux sont des lentilles divergentes et les éléments de lentilles (28, 30, 34) du deuxième groupe de matériaux sont des lentilles convergentes.

6.  Caméra infrarouge (2) selon l'une quelconque des revendications précédentes, dans laquelle deux éléments de lentilles (26, 32) du premier groupe de matériaux sont respectivement pourvus d'une surface asphérique.

7.  Caméra infrarouge (2) selon l'une quelconque des revendications précédentes, dans laquelle l'ouverture du diaphragme de l'optique (6) est égale à 1.

8.  Caméra infrarouge (2) selon l'une quelconque des revendications précédentes, dans laquelle l'optique (6) est réalisée sous la forme d'une optique de diaphragme avant.

9.  Caméra infrarouge (2) selon l'une quelconque des revendications précédentes, dans laquelle le détecteur (10) est un bolomètre.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0309075 A2
- EP 0452203 A1